# EUROPEAN PATENT APPLICATION

(11) **EP 4 625 521 A1**
(43) Date of publication of application: **01.10.2025**
(21) Application number: 25160731.3
(22) Date of filing: 27.02.2025
(51) Int. Cl.: H01M 4/131, H01M 4/505, H01M 4/525, C01G 53/50, H01M 10/054, H01M 4/02

(54) **POSITIVE ELECTRODE ACTIVE MATERIAL, POSITIVE ELECTRODE, SODIUM ION BATTERY, BATTERY ASSEMBLY, AND ELECTRIC SYSTEM**

(30) Priority: 29.03.2024 CN 202410381471
(71) Applicant: BYD Company Limited, Shenzhen, Guangdong 518118 (CN)
(72) Inventor: LIU, Qiannan, Shenzhen, 518118 (CN); TIAN, Yecheng, Shenzhen, 518118 (CN); BAO, Chunxiao, Shenzhen, 518118 (CN); GE, Liping, Shenzhen, 518118 (CN); GUO, Zizhu, Shenzhen, 518118 (CN)
(74) Representative: Mathys & Squire

(57) **Abstract**

A positive electrode active material, a positive electrode, a sodium ion battery, a battery assembly, and an electric system are disclosed. The positive electrode active material meets the following conditions. The cross-section filling rate of the positive electrode active material ranges from 75% to 99%; the tap density of the positive electrode active material ranges from 1.5 g/cm³ to 2.5 g/cm³; and the particle size discreteness K of the positive electrode active material ranging from 0.9 to 3.0, where K=(D90-D10)/D50. By defining the tap density, the cross-section filling rate, and the particle size distribution of the positive electrode active material in the above ranges, the compaction density of the positive electrode is improved, thus improving the volumetric energy density of the battery.

## Description

### FIELD

The present disclosure relates to the technical field of sodium ion batteries, and specifically to a positive electrode active material, a positive electrode, a sodium ion battery, a battery assembly, and an electric system.

### BACKGROUND

The global abundance of sodium is much higher than that of lithium, and sodium ion batteries have a greater cost advantage compared to lithium ion batteries. However, the energy density of existing sodium ion battery systems is much lower than that of lithium ion batteries, which limits the use of sodium ion batteries. The energy density of a battery is limited by the compaction density of the positive electrode active material. The compaction density of a battery is in turn limited by the tap density, the cross-section filling rate, and the particle size distribution of the positive electrode active material. Therefore, how to control the top density, the cross-section filling rate, and the particle size distribution of the positive electrode active material in a sodium ion battery is critical.

### SUMMARY

An object of the present disclosure is to provide a positive electrode active material, a positive electrode, a sodium ion battery, a battery assembly, and an electric system, to solve the problem of low energy density of sodium ion batteries.

To accomplish the object of the present disclosure, the present disclosure adopts the following technical solutions:

In a first aspect, the present disclosure provides a positive electrode active material. The positive electrode active material meets the following conditions. The cross-section filling rate of the positive electrode active material ranges from 75% to 99%; the tap density of the positive electrode active material ranges from 1.5 g/cm³ to 2.5 g/cm3; and the particle size discreteness K of the positive electrode active material ranges from 0.9 to 3.0, where K=(D90-D10)/D50.

By setting the tap density of the positive electrode active material within the above range, the compaction density of the positive electrode active material can be improved, to provide a higher volumetric energy density for the battery core. Moreover, by setting the cross-section filling rate of the positive electrode active material within the above range, the densification degree inside the particle and the filling rate of the particle can be increased. The increase of the filling rate allows for increased content of ions (for example, sodium ions) in the same volume and improved gravimetric capacity of the material. Moreover, the increase of the filling rate enables the material density of individual particles to reach the theoretical density as much as possible. By using a powder material with a specific discreteness K, as many small particles as possible, can be self-filled into the voids in the positive electrode, whereby the compaction density of the positive electrode is improved, to improve the volumetric energy density of the battery. By setting the tap density, the cross-section filling rate, and the particle size distribution of the positive electrode active material with the above ranges, cracking of the material during the charging and discharging process can be alleviated, and the compaction density and the gravimetric capacity of the positive electrode active material can be improved, to provide a higher volumetric energy density for the battery core and mitigate the problem of performance deterioration.

In an embodiment, the cross-section filling rate of the positive electrode active material ranges from 90% to 99%.

In an embodiment, the tap density of the positive electrode active material ranges from 2.1 g/cm³ to 2.5 g/cm³.

In an embodiment, the particle size discreteness K of the positive electrode active material ranges from 1.2 to 2.4.

In an embodiment, the positive electrode active material includes a sodium ion-layered transition metal oxide.

In an embodiment, the positive electrode active material has a general structural formula of NaₓAO₂, where A is one or more of Ni, Cu, Fe, Mn, Co, Cr, Li, Mo, Sn, Zn, Zr, Nb, Ru, Y, W, Al, Mg, Ti, Ca, Sr, Ir, Ba, and V, and 0.7≤x≤1.2.

In an embodiment, x meets 0.9≤x≤1.02.

In an embodiment, D10≥ 1µm, 2 µm≤D50≤13 µm, and D90≤21 µm.

In an embodiment, the positive electrode active material is one or more of a single crystal, a quasi-single crystal, and a polycrystal.

In a second aspect, the present disclosure provides a positive electrode. The positive electrode includes a current collector and a positive electrode active material according to the first aspect arranged on the current collector.

In a third aspect, the present disclosure provides a sodium ion battery, which includes a positive electrode according to the second aspect.

In a fourth aspect, the present disclosure provides a battery assembly, which includes a sodium ion battery according to the third aspect.

In a fifth aspect, the present disclosure provides an electric system, which includes a sodium ion battery according to the third aspect or a battery assembly according to the fourth aspect.

### BRIEF DESCRIPTION OF THE DRAWINGS

In order to more clearly explain the technical solutions in the embodiments of the present disclosure or in the prior art, the drawings used in the description of the embodiments or the prior art will be briefly described below. Obviously, the drawings depicted below are merely some embodiments of the present disclosure, and those skilled in the art can obtain other drawings based on these drawings without any creative efforts.
FIG. 1 is a schematic cross-sectional view showing the structure of a positive electrode according to an embodiment;
FIG. 2 is a schematic cross-sectional view showing the structure of positive electrode active material particles according to an embodiment;
FIG. 3 is an SEM image of a positive electrode active material according to an embodiment.

### DETAILED DESCRIPTION

The technical solutions in embodiments of the present disclosure are clearly and completely described in the following with reference to the accompanying drawings in the embodiments of the present disclosure. It will be appreciated that, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

Unless otherwise defined, all technical and scientific terms used herein have the same meaning as commonly understood by persons skilled in the art. The terms used in the description of the present disclosure are for the purpose of describing particular embodiments only and are not intended to limit the present disclosure. The term "and/or" as used in the present disclosure includes any and all combinations of one or more of the listed related items.

Embodiments of the present disclosure will be described in detail below with reference to accompanying drawings. The embodiments and the features in the embodiments may be combined with each other without conflict.

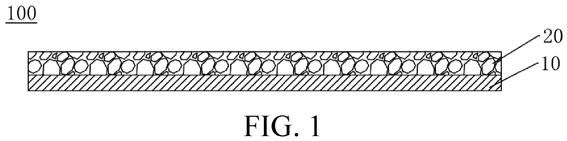

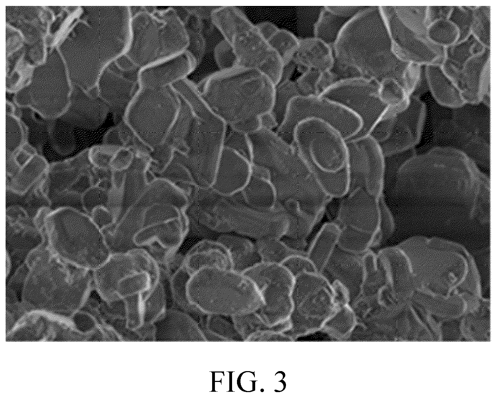

The present disclosure provides a positive electrode 100, which includes a current collector 10 and a positive electrode active material arranged on the current collector 10, as shown in FIGs 1 and 3.

Specifically, the positive electrode 100 may be a sodium ion positive electrode, and the positive electrode 100 is used in a sodium ion battery. After the positive electrode 100 is formed, the current collector 10 has a positive electrode active material layer 20 thereon, and the positive electrode active material layer 20 includes a positive electrode active material, a conductive agent, and a binder. The positive electrode active material is an active ingredient in the sodium ion battery and used to provide sodium ions.

In the fabrication process of the positive electrode 100, a positive electrode slurry is applied onto the current collector 10, and then rolled and heated to form the positive electrode active material layer 20. The positive electrode slurry contains all materials in the positive electrode active material layer 20.

Optionally, the current collector 10 may be a foamed metal mesh, or a metal film, etc., specifically including any one of a copper foil and an aluminum foil.

Optionally, the conductive agent may be one or more of carbon nanotubes (CNTs), single-walled carbon nanotubes (SWCNTs), conductive carbon black (SP) and graphene. The binder may be one or more of polyvinylidene fluoride (PVDF), carboxymethyl cellulose (CMC), styrene-butadiene rubber (SBR) and polyacrylic acid (PAA).

Optionally, the content of the positive electrode active material in the slurry is not less than 95% by weight, the content of the conductive agent is not higher than 2% by weight, and the content of the binder is not higher than 3% by weight.

Optionally, the areal density of the positive electrode 100 is not less than 340 g/m², and the compaction density of the positive electrode 100 is not less than 2.9 g/cm³.

The positive electrode active material provided in the present disclosure meets the following conditions. The cross-section filling rate of the positive electrode active material ranges from 75% to 99%; the tap density of the positive electrode active material ranges from 1.5 g/cm³ to 2.5 g/cm³; and the particle size discreteness K of the positive electrode active material ranging from 0.9 to 3.0, where K=(D90-D10)/D50.

The tap density and particle size discreteness K of the positive electrode active material in the battery can be tested by the following methods.

1) After the battery is discharged to 1.5V at a low current (such as 0.05C/0.1C/0.2C), it is disassembled in an inert environment and the positive electrode sheet is removed. Test of cross-section filling rate: The cross-section of the electrode sheet is cut by a plasma beam, and 10 SEM images are taken at a magnification of 1000 times. The particles are identified and the filling rate (filling rate = non-empty area in the cross-sectional area of the particle/cross-sectional area of the particle), that is, the cross-section filling rate, is statistically calculated by a machine.

2) The positive electrode sheet is washed with an organic solvent, in which the solvent may be one or more of an alcohol, an ester, or an ether, etc. Then, the positive electrode sheet is scraped to obtain the powder of the positive electrode material. The scraped powder of the positive electrode material is ultrasonically washed for 10 min, and the upper floating matter is removed. Then, the solvent is added again, and the powder is ultrasonically washed for 10 min. The washing is repeated three times. The bottom material is collected and dried under vacuum until the moisture content in the powder is less than 500 ppm. Thus, the test positive electrode active material is obtained. The tap density and the discreteness of the test positive electrode active material are determined. The tap density and the discreteness are determined by the following methods.

Tap density test: The tap density is tested according to GB/T 31057.2-2018 Granular materials-Physical properties-Part 2: Determination of tap density. Test apparatus: BT-1001 intelligent powder characteristic tester. The powder of weight m is weighed and filled in a test container in such a manner that the powder surface is kept as horizontal as possible. Then the powder is vibrated at a frequency of 300 times/min until the volume of the powder does not decrease any longer. At this time, the powder volume v is read, and the tap density = m/v g/cm³.

Particle size discreteness test: The discreteness is tested using Malvern 3000 laser particle size analyzer according to GB/T19077.1. Particle size discreteness = (D₉₀-D₁₀)/D₅₀.

By setting the tap density of the positive electrode active material within the above range, the compaction density of the positive electrode active material can be improved, to provide a higher volumetric energy density for the battery core. Moreover, by setting the cross-section filling rate of the positive electrode active material within the above range, the densification degree inside the particle and the filling rate of the particle can be increased. The increase of the filling rate allows for increased content of sodium ions in the same volume and improved gravimetric capacity of the material. Moreover, the increase of the filling rate enables the material density of individual particles to reach the theoretical density as much as possible. By using a powder material with a specific discreteness K, as many small particles as possible, can be self-filled into the voids in the positive electrode, whereby the compaction density of the positive electrode is improved, to improve the volumetric energy density of the battery. By setting the tap density, the cross-section filling rate, and the particle size distribution of the positive electrode active material with the above ranges, the cracking of the material during the charging and discharging process can be alleviated, and the compaction density and the gravimetric capacity of the positive electrode active material can be improved, to provide a higher volumetric energy density for the battery core and mitigate the problem of performance deterioration.

The cross-section filling rate of the positive electrode active material ranges from 75% to 99%, and may be, but is not limited to, 75%, 77%, 79%, 81%, 83%, 85%, 87%, 89%, 91%, 93%, 95%, 97%, and 99%.

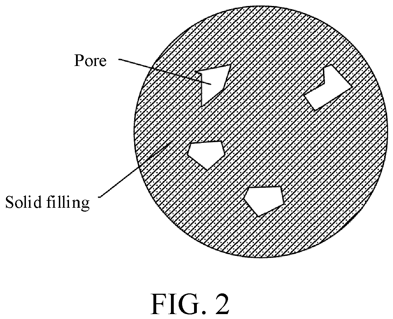

As shown in FIG. 2, the cross-section filling rate of the positive electrode active material is actually the proportion of the solid part in the positive electrode active material in the cross section (the proportion of the shaded part in the positive electrode active material particles in FIG. 2). The solid filling in FIG. 2 is the solid part, and the blank part is the pore. Conversely, the cross-section filling rate of the positive electrode active material can also be understood as the cross-section porosity of the positive electrode active material.

Understandably, the cross-section filling rate is an important index to measure individual particles of the positive electrode active material. A positive electrode active material with a higher cross-section filling rate has a higher internal densification degree, that is, higher content of sodium ions. The content of sodium ions in the same volume of positive electrode active material increases and the gravimetric capacity of the material is higher, which improve the energy density of the positive electrode active material.

Moreover, a positive electrode active material with a higher cross-section filling rate (lower porosity) has a more stable structure. After the positive electrode active material is rolled and formed into the positive electrode active material layer 20, the breakage of the positive electrode active material is reduced, so that pulverization and shedding during the use of the positive electrode 100 are reduced.

When the cross-section filling rate is below the lower limit of this range, it indicates that the internal pores in the positive electrode active material are rich, causing low capacity and poor structural strength of the positive electrode active material.

In an embodiment, the cross-section filling rate of the positive electrode active material ranges from 90% to 99%. Optionally, the cross-section filling rate of the positive electrode active material may be, but is not limited to, 90%, 91%, 92%, 93%, 94%, 95%, 96%, 97%, 98%, and 99%. If the cross-section filling rate is in the above range, the energy density of the positive electrode active material can be further improved, and pulverization and shedding during the use of the positive electrode are reduced.

The tap density of the positive electrode active material ranges from 1.5 g/cm³ to 2.5 g/cm³, and may be, but is not limited to, 1.5 g/cm³, 1.6 g/cm³, 1.7 g/cm³, 1.8 g/cm³, 1.9 g/cm³, 2.0 g/cm³, 2.1 g/cm³, 2.2 g/cm³, 2.3 g/cm³, 2.4 g/cm³, and 2.5 g/cm³.

It can be understood that the tap density is an important index to characterize a powder. The tap density is tested as follows: A certain amount of a powder is charged into a container, and vibrated under certain conditions, until the volume of powder in the container does not decreases any longer. The volume of powder is read, and the tap density is obtained by dividing the weight of the powder by the volume.

The tap density is greatly affected by the particle size distribution and particle morphology. The compaction density is affected by the tap density. Generally, a high tap density may result in a high compaction density, but the particle size distribution and surface morphology of the powder needs to be considered.

With a high tap density of the positive electrode active material, a corresponding capacity can be achieved with a less thick coating layer when the electrode sheet of the battery is prepared by coating. In short, as the tap density increases, more material is contained in the same volume of battery, so the specific energy increases. Therefore, the tap density is critical to the high capacity of the sodium ion battery. Moreover, the tap density will also have an impact on the processability, especially the rolling. If the tap density exceeds the above range, the electrode sheet may be brittle or broken.

In an embodiment, the tap density of the positive electrode active material ranges from 2.1 g/cm³ to 2.5 g/cm³. Optionally, the tap density of the positive electrode active material may be, but is not limited to, 2.1 g/cm³, 2.15 g/cm³, 2.2 g/cm³, 2.25 g/cm³, 2.3 g/cm³, 2.35 g/cm³, 2.4 g/cm³, 2.45 g/cm³, and 2.5 g/cm³. When the tap density is in the above range, the thickness of the positive electrode active material layer can be further reduced, the energy density of the positive electrode is improved, and the product yield of the positive electrode can be increased.

The particle size discreteness K of the positive electrode active material ranges from 0.9 to 3.0, and may be, but is not limited to, 0.9, 1.0, 1.2, 1.4, 1.6, 1.8, 2.0, 2.2, 2.4, 2.6, 2.8, and 3.0. K = (D90-d10)/D50, where D10 represents a corresponding particle size on the accumulative curve when the volume passing percentage is 10%, D50 represents a corresponding particle size on the accumulative curve when the volume passing percentage is 50%, and D90 represents a corresponding particle size on the accumulative curve when the volume passing percentage is 90%.

It will be understood that D50 can be the average particle size of the positive electrode active material, which means that particles smaller than it and larger than it account for 50% respectively. D10 and D90 can be the boundary particle sizes of positive electrode active material, which are closer to the maximum and minimum particle sizes in a common sense. For example, D10=8 µm means that the number of particles with a diameter less than 8 µm accounts for 10%, and D90 = 60 µm means that the number of particles with a diameter less than 60 µm accounts for 90%. A smaller discreteness K represents a narrower particle size distribution range. A small number of particles that are too large and too small indicates a more concentrated particle size distribution.

In an embodiment, the particle size discreteness K of the positive electrode active material ranges from 1.2 to 2.4. Optionally, the particle size discreteness K of the positive electrode active material may be, but is not limited to, 1.2, 1.3, 1.4, 1.5, 1.6, 1.7, 1.8, 1.9, 2.0, 2.1, 2.2, 2.3, and 2.4. When the particle size discreteness K is in the above range, as many small particles as possible, can be further self-filled into the voids in the positive electrode, whereby the compaction density of the positive electrode is improved, to improve the volumetric energy density of the battery.

In an embodiment, the positive electrode active material includes a sodium ion-layered transition metal oxide.

In an embodiment, the positive electrode active material has a general structural formula of NaₓAO₂, where A is one or more of Ni, Cu, Fe, Mn, Co, Cr, Li, Mo, Sn, Zn, Zr, Nb, Ru, Y, W, Al, Mg, Ti, Ca, Sr, Ir, Ba, and V, and 0.7≤x≤1.2.

In an embodiment, x meets 0.9≤x≤ 1.02. Optionally, the specific value of x may be 0.9, 0.91, 0.92, 0.93, 0.94, 0.95, 0.96, 0.97, 0.98, 0.99, 1, 1.01, and 1.02.

In an embodiment, the positive electrode active material is one or more of a single crystal, a quasi-single crystal, and a polycrystal.

In an embodiment, D10≥ 1µm, 2 µm≤D50≤ 13 µm, and D90≤21 µm. Optionally, the specific value of D10 may be 1 µm, 1.5 µm, 2 µm, 2.5 µm, 3 µm, 3.5 µm, 4 µm, 4.5 µm, and 5 µm. Optionally, the specific value of D50 may be 2 µm, 3 µm, 4 µm, 5 µm, 6 µm, 7 µm, 8 µm, 9 µm, 10 µm, 11 µm, 12 µm, and 13 µm. Optionally, the specific value of D90 may be 10 µm, 11 µm, 12 µm, 13 µm, 14 µm, 15 µm, 16 µm, 17 µm, 18 µm, 19 µm, 20 µm, and 21 µm.

In an embodiment, the positive electrode active material is prepared by a method as follows.

a) M source(s) is/are precipitated to form a first precursor of M sources, where the precipitation temperature is 30 to 80°C, and the precipitation time is 4 to 24 h.

b) The precursor of M source(s) is mixed with a sodium source, and subjected to solid-phase sintering at 600 to 1100°C for 10 to 24 h, to obtain a second precursor.

c) The second precursor is subjected to solid-phase sintering at 300 to 800°C for 10 to 24 h.

In Step a), the M source(s) may include one or more metal sources.

In Step b), the M source(s) can be mixed with other doping elements besides the sodium source. That is, Step b) may further include the following steps. The precursor of M sources is/are mixed with the sodium source and other doping elements, and subjected to solid-phase sintering at 600 to 1100°C for 10 to 24 h to obtain the second precursor.

In Step c), the second precursor may be mixed with a coating element and then subjected to solid-phase sintering at 300 to 800°C for 10 to 24 h.

The cross-section filling rate, the tap density and the particle size discreteness K can be adjusted by adjusting the raw materials, and the reaction temperature and time in each step.

In an embodiment, the present disclosure further provides a sodium ion battery, which includes a positive electrode according to the above embodiments, a negative electrode, and a separator, where the positive electrode and the negative electrode are respectively arranged on two opposite sides of the separator.

The type of the sodium ion battery includes, but is not limited to, a soft pack battery, a square battery, and a cylindrical battery.

Optionally, the negative electrode includes a current collector and a negative electrode material arranged on the current collector. After the negative electrode is formed, there is a negative electrode material layer on the current collector, which includes a negative electrode material, a conductive agent and a binder. The negative electrode material may be hard carbon.

Optionally, the content of the negative electrode material in the slurry is not less than 93% by weight, the content of the conductive agent is not higher than 3% by weight, and the content of the binder is not higher than 4% by weight. The areal density of the obtained negative electrode ranges from 150 to 210 g/m², and the compaction density of the negative electrode is not less than 0.9 g/cm³.

Optionally, the separator may be one of a conventional polyethylene (propylene) separator, a glued separator, and a ceramic separator.

Optionally, the sodium ion battery also includes an electrolyte solution, which contains an organic solvent, a sodium salt solute and an electrolyte additive.

Optionally, the organic solvent in the electrolyte solution may be one of ethylene carbonate (EC), propylene carbonate (PC), butyl carbonate (BC), γ-butyrolactone (GBL), ethylene glycol dimethyl ether (DME), tetrahydrofuran (THF), methyl ethyl carbonate (EMC), dimethyl carbonate (DMC), diethyl carbonate (DEC), methyl formate (MF), methyl acetate (MA), dioxolane, and 4-Methyl-1,3-dioxolane (4-MeDOL), or a combination thereof. The sodium salt solute may be one of NaBF₄, NaClO₄, NaPF₆, NaAsF₆, NaCF₃SO₃, Na(CF₃SO₂)₂N, and NaC₄F₉SO₃, or a combination thereof. The electrolyte additive may be one of FEC, VC, PS, DTD, TEP, and TMP, or a combination thereof.

Optionally, the sodium ion battery may be a wound battery core, a stacked battery core, or a single battery core.

In an embodiment, the present disclosure further provides a battery assembly, which includes the sodium ion battery as described above. The battery assembly may be a battery pack or a battery set.

In an embodiment, the present disclosure further provides an electric system, which includes a battery assembly as described above and an electric device, where the battery assembly powders the electric device. Optionally, the electric system may be a vehicle or an energy storage power station.

In an embodiment, the present disclosure also provides a method for preparing a sodium ion battery, which at least includes the following steps:

Step S1: A positive electrode active material, a conductive agent, and a binder are uniformly dispersed in the solvent N-methylpyrrolidone (NMP) and uniformly coated on the surface of an aluminum foil (current collector), and dried to obtain a positive electrode.

Specifically, the positive electrode active material is uniformly dispersed with other auxiliary materials according to a ratio of positive electrode active material:PVDF:CNT:SP:NMP=97:1:1.5:0.5:30, coated on the aluminum foil, and baked at 120°C to obtain the positive electrode, which is rolled to 3.0 g/cm³.

Step S2: A negative electrode active material, a conductive agent, and a binder are uniformly dispersed in deionized water as a solvent and uniformly coated on the surface of an aluminum foil (current collector), and dried to obtain a negative electrode.

Specifically, hard carbon, the conductive agent SP, and the binder SBR are evenly mixed in deionized water according to the ratio of 93:3:4, evenly coated on the surface of an aluminum foil, and baked at 110°C to obtain the negative electrode, which is rolled to 0.95 g/cm³.

Step S3: The positive electrode, a separator, and the negative electrode are sequentially wound or stacked to obtain an electrode core.

Step S4: After the electrode core is placed in a casing, an electrolyte solution is injected; and a complete secondary sodium ion battery is obtained after maturization, formation, aging and capacity grading.

Specifically, after the electrode core is placed in a casing, an electrolyte solution (solute: 1 mol/L NaPF₆, and solvent: EC:EMC = 1:1 (v : v)+3 % FEC) is injected, and a complete secondary sodium ion battery is obtained after maturization, formation, aging and capacity grading.

The present disclosure will be further explained with examples and comparative examples. The present disclosure provides Examples 1 to 10 and Comparative Examples 1 to 7. The types of positive electrode active materials in the examples and comparative examples are shown in Table 1, and used to prepare batteries of various examples according to the manufacturing method of sodium ion battery mentioned above.

The cross-section filling rate, the porosity, the particle size discreteness, and the tap density of the positive electrode active material or positive electrode sheet in the examples and comparative examples are tested respectively, and the energy density of the battery is tested. The specific test methods are as follows.

Cross-section filling rate: The cross-section of the electrode sheet of the battery is cut by a plasma beam, and 10 SEM images are taken at a magnification of 1000 times. The particles are identified and the cross-section filling rate (cross-section filling rate = non-empty area in the cross-sectional area of the particle/cross-sectional area of the particle) is statistically calculated by a machine.

Porosity test: The voids between particles of the positive electrode active material in the positive electrode is tested by mercury intrusion porosimetry according to GBT21650.1.

Particle size discreteness test: The particle size discreteness is tested using Malvern 3000 laser particle size analyzer according to GB/D50. Particle size discreteness=(D90-D10)/D50.

Tap density test: The tap density is tested according to GB/T 31057.2-2018 Granular materials-Physical properties-Part 2: Determination of tap density. Test apparatus: BT-1001 intelligent powder characteristic tester. The positive electrode active material of weight *m* is weighed and filled in a test container in such a manner that the powder surface is kept as horizontal as possible. Then the powder is vibrated at a frequency of 300 times/min until the volume of the positive electrode active material does not decrease any longer. At this time, the powder volume v is read, and the tap density = *m*/*v* g/cm³.

Energy density test: The battery is charged to 4.0V at 1/3C, and discharged to 1.5V at 1/3C. The cycle is repeated 3 times. The volumetric energy density is calculated after the last time.

Specific test results are shown in Table 1 and Table 2.

**Table 1**

| | Chemical formula of material | Tap density (g/cm³) | Cross-section filling rate (%) | Particle size discreteness K |
|---|---|---|---|---|
| Example 1 | NaNi_{0.3}Co_{0.3}Fe_{0.4}O₂ | 2.37 | 98.87 | 1.35 |
| Example 2 | Na[Ni_{0.25}Co_{0.25}Mn_{0.25}Fe_{0.25}]O₂ | 2.38 | 97.57 | 1.29 |
| Example 3 | NaNi_{0.5}Mn_{0.5}O₂ | 2.21 | 89.03 | 2.11 |
| Example 4 | NaNi_{1/3}Co_{1/3}Mn_{1/3}O₂ | 2.47 | 81.67 | 1.84 |
| Example 5 | NaFe_{0.5}Mn_{0.5}O₂ | 2.18 | 78.06 | 1.88 |
| Example 6 | NaNi_{0.3}Mn_{0.3}Ti_{0.4}O₂ | 2.46 | 93.61 | 1.09 |
| Example 7 | NaNi_{0.3}Fe_{0.3}Mn_{0.4}O₂ | 2.36 | 83.31 | 2.27 |
| Example 8 | Na_{0.96}Ni_{0.3}Cr_{0.3}Mn_{0.4}O₂ | 1.77 | 90.92 | 1.49 |
| Example 9 | Na_{0.9}Ni_{0.4}Mn_{0.3}Ti_{0.3}O₂ | 1.85 | 94.73 | 1.19 |
| Example 10 | NaNi_{1/3}Fe_{1/3}Mn_{1/3}O₂ | 1.99 | 92.97 | 1.06 |
| Comparative Example 1 | Na[Cu_{1/9}Ni_{2/9}Fe_{1/3}Mn_{1/3}]O₂ | 2.23 | 71.25 | 1.55 |
| Comparative Example 2 | Na[Ni_{0.4}Mn_{0.4}Ti_{0.2}]O₂ | 2.46 | 86.42 | 3.25 |
| Comparative Example 3 | NaNi_{1/3}Cr_{1/3}Mn_{1/3}O₂ | 1.85 | 84.8 | 0.75 |
| Comparative Example 4 | Na_{7/9}[Cu_{0.22}Fe_{1/9}Mn_{2/3}]O₂ | 1.56 | 74.16 | 0.73 |
| Comparative Example 5 | NaCu_{1/3}Fe_{1/3}Mn_{1/3}O₂ | 1.42 | 73.77 | 2.39 |
| Comparative Example 6 | Na_{0.96}Ni_{0.4}Al_{0.1}Mn_{0.4}Ti_{0.1}O₂ | 2.54 | 99.23 | 0.65 |
| Comparative Example 7 | Na[Ni_{0.4}Cu_{0.1}Mn_{0.4}Ti₀.₁]O₂ | 1.23 | 71.36 | 3.14 |

**Table 2**

| | Porosity (%) | D10 (µm) | D50 (µm) | D90 (µm) | Energy density Wh/L |
|---|---|---|---|---|---|
| Example 1 | 10.37 | 2.91 | 5.9 | 10.85 | 1174 |
| Example 2 | 15.23 | 2.64 | 5.32 | 9.52 | 1160 |
| Example 3 | 19.96 | 2.6 | 4.32 | 11.7 | 1147 |
| Example 4 | 17.29 | 4.7 | 8.57 | 20.5 | 1144 |
| Example 5 | 2.33 | 4.64 | 7.52 | 18.81 | 1112 |
| Example 6 | 1.1 | 2.24 | 5.83 | 8.62 | 1104 |
| Example 7 | 15.68 | 3.18 | 6.53 | 17.98 | 1075 |
| Example 8 | 13.45 | 2.76 | 5.12 | 10.38 | 1047 |
| Example 9 | 5.96 | 4.2 | 7.48 | 13.08 | 1030 |
| Example 10 | 5.94 | 4.51 | 5.84 | 10.7 | 1005 |
| Comparative Example 1 | 26.74 | 3.2 | 11.26 | 20.6 | 915 |
| Comparative Example 2 | 13.34 | 2.01 | 4.71 | 17.32 | 901 |
| Comparative Example 3 | 5.16 | 2.3 | 5.23 | 6.2 | 885 |
| Comparative Example 4 | 23.82 | 4.32 | 6.3 | 8.9 | 884 |
| Comparative Example 5 | 24.25 | 1.82 | 4.22 | 11.9 | 875 |
| Comparative Example 6 | 0.74 | 11.2 | 12.8 | 19.52 | 848 |
| Comparative Example 7 | 26.72 | 1.7 | 4.21 | 14.9 | 809 |

From the data in Table 1 and Table 2 above, it can be concluded that the increase of the filling rate (decrease of the porosity) and tap density of particles will increase the content of sodium ions in the same volume and improve the gravimetric capacity of the material. Moreover, the proper increase of the filling rate enables the material density of individual particles to reach the theoretical density as much as possible and improves the compaction density of the positive electrode, thus improving the volumetric energy density. Moreover, by using particles of specific particle size distribution range, the voids between particles can be reduced, and small particles, as many as possible, can be self-filled into the voids in the positive electrode, whereby the compaction density of the positive electrode is improved, to improve the volumetric energy density.

In the description of the embodiments of the present disclosure, it should be understood that directions or location relationships indicated by the terms "center", "upper", "lower", "left", "right", "vertical", "horizontal", "inner", and "outer" are directions or location relationships shown based on the accompanying drawings, are merely used for the convenience of describing the present disclosure and simplifying the description, but are not used to indicate or imply that a device or an element must have a particular direction or must be constructed and operated in a particular direction, and therefore, cannot be understood as a limitation to the present disclosure.

Preferred embodiments of the present disclosure have been disclosed above; however, the scope of the claims of the present disclosure is not limited thereto. It can be understood by those skilled in the art that equivalent variations made to all or part of the process implementing the embodiments in accordance with the claims of the present disclosure shall fall within the scope of the present disclosure.

## Claims

1. A positive electrode active material, a cross-section filling rate of the positive electrode active material ranging from 75% to 99%;
a tap density of the positive electrode active material ranging from 1.5 g/cm³ to 2.5 g/cm³; and
particle size discreteness K of the positive electrode active material ranging from 0.9 to 3.0, wherein K=(D90-D10)/D50.

2. The positive electrode active material according to claim 1, wherein the cross-section filling rate of the positive electrode active material ranges from 90% to 99%.

3. The positive electrode active material according to claim 1 or 2, wherein the tap density of the positive electrode active material ranges from 2.1 g/cm³ to 2.5 g/cm³.

4. The positive electrode active material according to any one of claims 1 to 3, wherein the particle size discreteness K of the positive electrode active material ranges from 1.2 to 2.4.

5. The positive electrode active material according to any one of claims 1 to 4, comprising a sodium ion-layered transition metal oxide.

6. The positive electrode active material according to any one of claims 1 to 5, wherein the positive electrode active material has a general structural formula of NaₓAO₂, wherein A is one or more of Ni, Cu, Fe, Mn, Co, Cr, Li, Mo, Sn, Zn, Zr, Nb, Ru, Y, W, Al, Mg, Ti, Ca, Sr, Ir, Ba, and V, and 0.7≤x≤1.2.

7. The positive electrode active material according to claim 6, wherein x meets 0.9≤x≤1.02.

8. The positive electrode active material according to any one of claims 1 to 7, wherein the positive electrode active material is one or more of a single crystal, a quasi-single crystal, and a polycrystal.

9. The positive electrode active material according to any one of claims 1 to 8, wherein D10≥1µm, 2 µm≤D50≤13 µm, and D90≤21 µm.

10. A positive electrode, comprising a current collector and a positive electrode active material according to any one of claims 1 to 9 arranged on the current collector.

11. A sodium ion battery, comprising a positive electrode according to claim 10.

12. A battery assembly, comprising a sodium ion battery according to claim 11.

13. An electric system, comprising a sodium ion battery according to claim 11 or a battery assembly according to claim 12.
